# EUROPEAN PATENT APPLICATION

(11) **EP 2 354 943 A1**
(43) Date of publication of application: **10.08.2011**
(21) Application number: 10196989.7
(22) Date of filing: 24.12.2010
(51) Int. Cl.: G06F 9/50

(54) **Method and system for connection management and resource sharing**

(30) Priority: 30.12.2009 US 650032; 22.12.2010 US 976363
(71) Applicant: Psion Teklogix Inc., Mississauga, ON L5N 7J9 (CA)
(72) Inventor: Meghdies Vardeh Eil Beron, Missisauga Ontario L5M 6T6 (CA); Newmann Nader America, Brampton Ontario L7A 1S0 (CA)
(74) Representative: Austin, Hedley William

(57) **Abstract**

There is provided a method and system for sharing a pre-determined plurality of resources of a limited resource computing device with a plurality of resource dependent devices. The method comprises: determining a plurality of groups based on said pre-determined plurality of resources; classifying each said resource dependent device as a member of one of said groups based on device information associated therewith; associating each said group with a particular one of said pre-determined resources, such that each said group shares said particular resource; and selecting one of said resource dependent devices in each said group for permitting subsequent connection between said selected resource dependent device with said associated particular resource.

## Description

### FIELD

The present invention relates to computing devices, more specifically to a system and method for sharing a pre-determined plurality of resources of a limited resource computing device with a plurality of resource dependent devices and for controlling connection between same.

### BACKGROUND

Computing devices, such as handheld devices (e.g., PDAs, scanners, RFID readers/writers, image scanners), have been widely used in various applications. To expand their functionalities, the computing devices are generally configured to communicate with external devices via their communication ports (COMs) or other resource points.

However, the computing devices typically have a limited number of resources such as COM ports (e.g. physical and virtual, or software, ports) and Bluetooth serial port, and thus these limited computational resources can limit the efficiency and use of the computing device and its resources. In order to maximize use of the resources of the limited resource computing device, it would be advantageous to provide a solution that obviates or mitigates at least some of the above mentioned disadvantages.

### SUMMARY

In accordance with one aspect of the present invention there is provided a system and method for sharing a pre-determined plurality of resources of a limited resource computing device with a plurality of resource dependent devices. The method comprises: determining a plurality of groups based on said pre-determined plurality of resources; classifying each said resource dependent device as a member of one of said groups based on device information associated therewith; associating each said group with a particular one of said pre-determined resources, such that each said group shares said particular resource; and selecting one of said resource dependent devices in each said group for permitting subsequent connection between said selected resource dependent device with said associated particular resource. In one aspect, the device information comprises at least one of: class of device, device type, device manufacturer, Bluetooth address, services provided by said resource dependent device.

In accordance with another aspect, classifying each said resource dependent device as a member of one of said groups further comprises: associating a first group and a first particular resource of said pre-determined plurality of resources to a first resource dependent device; and automatically associating a second resource dependent device classified in the first group with said first particular resource.

In accordance with another aspect, classifying said first resource dependent device in said first group is in dependence upon a pre-defined commonality between the device information of each said resource dependent device in said first group.

In accordance with another aspect, there is provided a computing device for configuring sharing of a plurality of resources of a limited resource computing device with a plurality of resource dependent devices, the computing device comprising: a processor; a memory coupled to the processor having instructions stored thereon for execution by the processor, the memory comprising instructions for: determining a plurality of groups based on said pre-determined plurality of resources; classifying each said resource dependent device as a member of one of said groups based on device information associated therewith; associating each said group with a particular one of said pre-determined resources, such that each said group shares said particular resource; and selecting one of said resource dependent devices in each said group for permitting subsequent connection between said selected resource dependent device with said associated particular resource.

### BRIEF DESCRIPTION OF THE DRAWINGS

These and other features of the invention will become more apparent from the following description in which reference is made to the appended drawings wherein:
Figure 1 is an example of a resource sharing system for pre-determined resources of a computing device with a plurality of resource dependent devices;
Figure 2 is a block diagram illustrating the functional subsystems of the computing device of

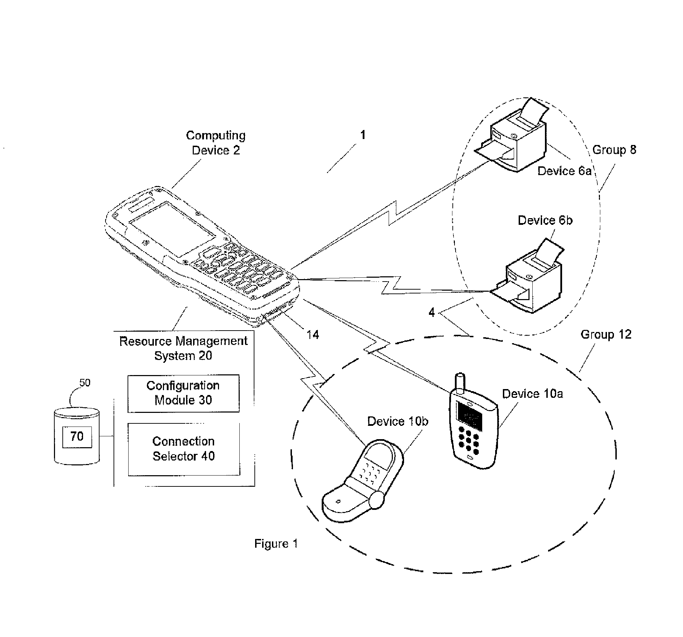

Figure 1 including a resource management system in accordance with one aspect of the present invention;

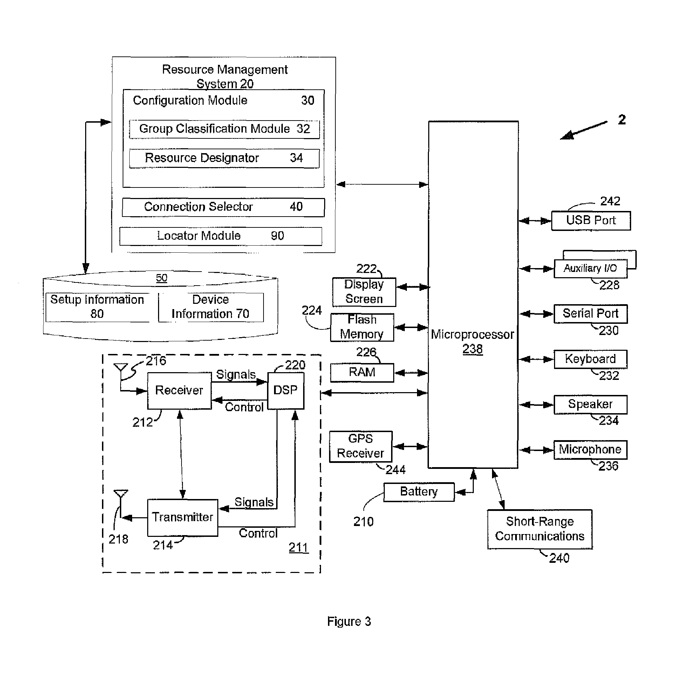

Figure 3 is a block diagram illustrating the functional subsystems of the computing device of
Figure 1 including a locator module in accordance with another aspect of the present invention;

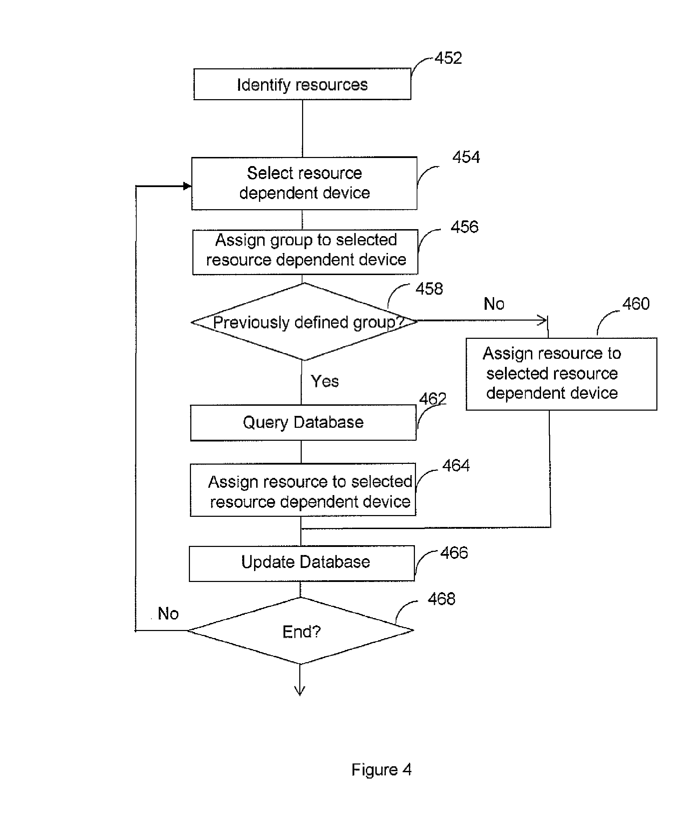

Figure 4 is a flow chart illustrating an example operation of resource sharing system of Figure 1;

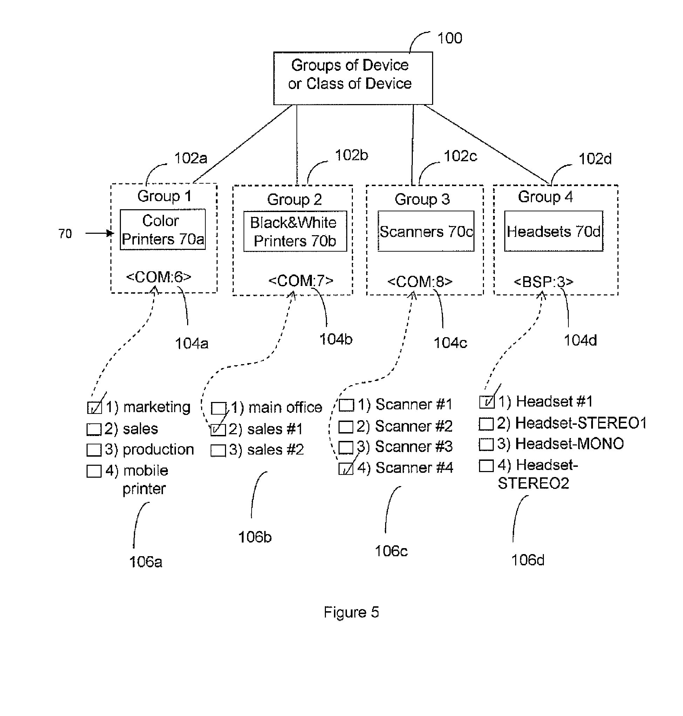

Figure 5 is a diagram illustrating an example of group classifications for the resource dependent devices according to pre-defined class of devices and communication port associations for same;

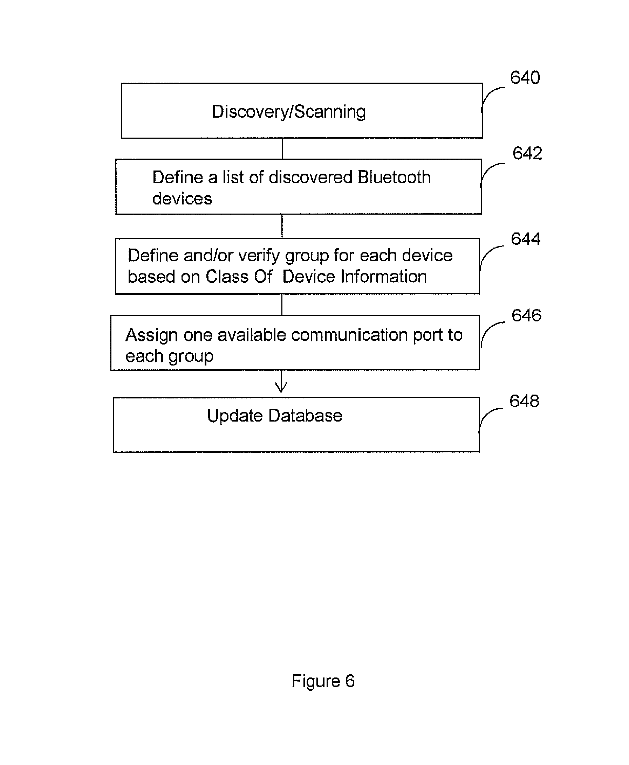

Figure 6 is a flowchart illustrating an example process for resource sharing with Bluetooth devices;

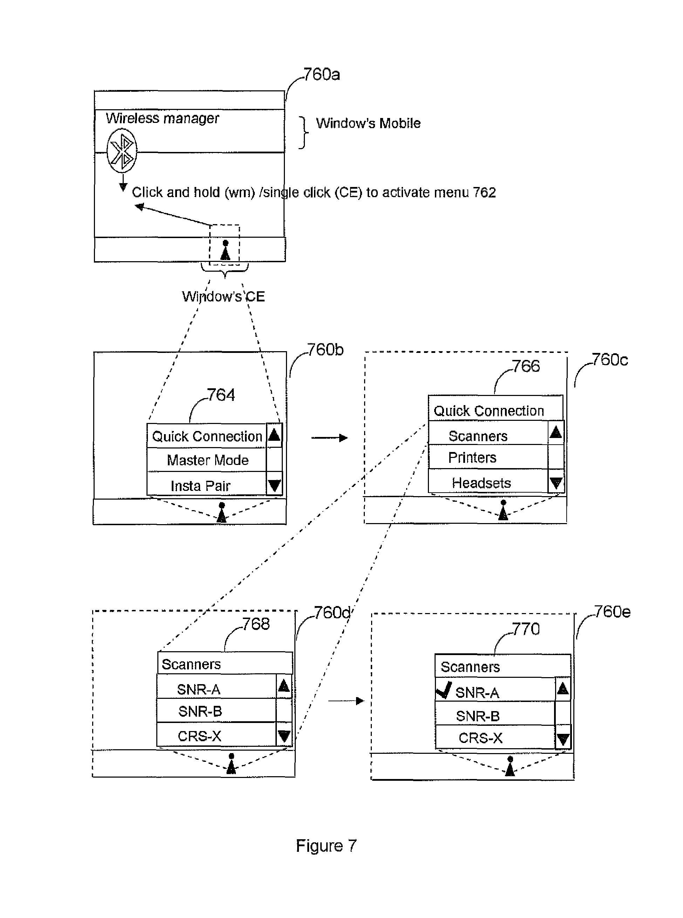

Figure 7 is a diagram illustrating an example of a portion of a graphical user interface screen displayed to a user for a connection selector; and

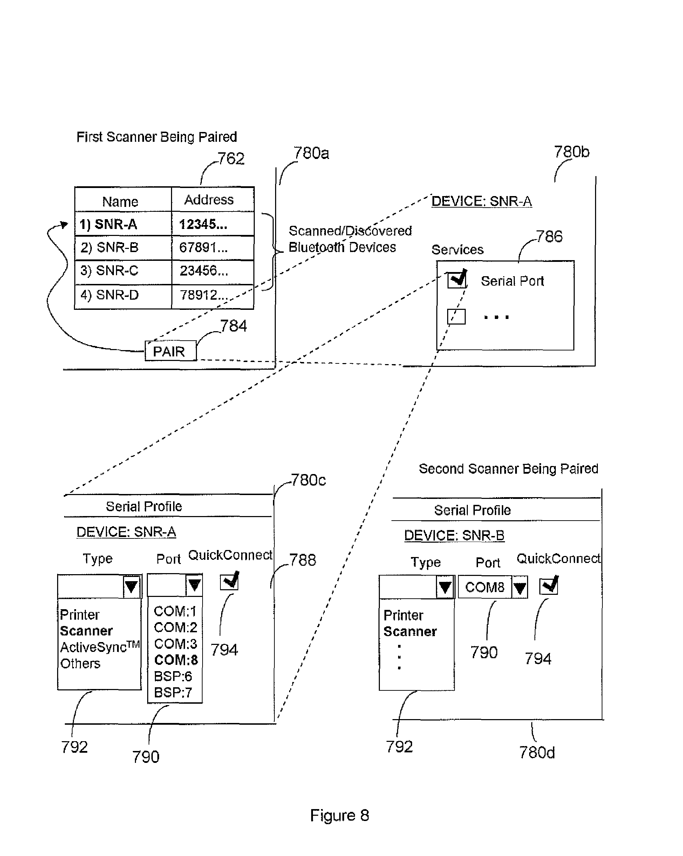

Figure 8 is a diagram illustrating an example of a portion of a graphical user interface screen displayed to the user of a resource management system for defining group classifications and resource associations.

### DETAILED DESCRIPTION

One or more currently preferred embodiments have been described by way of example. It will be apparent to persons skilled in the art that a number of variations and modifications can be made without departing from the scope of the invention as defined in the claims.

Computing devices can have a limited number of predetermined resources available for sharing with resource dependent devices interconnected therewith. These resources discussed herein can include any hardware or software component of the computing devices available for access and sharing by wired or wirelessly interconnected resource dependent devices. The resources discussed herein can include for example, resource points or communication ports such as hardware and/or software ports; hardware and/or software interfaces (e.g. for connecting to peripheral devices); software/hardware functionality such as printing or scanning and/or memory. The resource point can also include for example: a serial port, a COM port, a Bluetooth Serial port, a software, or virtual, port (e.g. for wirelessly connecting the computing device with the desired resource dependent device) for connecting to services and/or functionality of the computing devices. Accordingly, in view of the limitations of the limited resource computing device, it would be advantageous to provide a system and method for sharing the pre-determined plurality of resources of the limited resource computing device with a plurality of resource dependent devices.

As used herein, the term "computing device" is intended to include a wide range of digital devices including, without limitation, devices which generate digital information, such as computer terminals, RFID readers, writers, scanners, printers, smart card readers, and other types of computing devices envisaged by a person skilled in the art. Additionally, computing devices can include fixed, handheld and/or portable devices and/or embedded devices such as mobile computers, mobile phones, digital cameras, GPS receivers, phone headsets, Bluetooth devices, and other electronic devices having limited pre-determined resources for sharing with resource dependent devices as envisaged by a person skilled in the art. The computing device can use operating systems such as Windows Mobile (WM) and Windows Embedded Compact (CE) or other operating systems as will be envisaged by a person skilled in the art.

Referring now more particularly to the accompanying figures, Figure 1 depicts an example of a resource sharing system 1 for sharing a pre-determined plurality of resources of a limited resource computing device 2 (also referred to herein to as "computing device") with a plurality of resource dependent devices 4 in accordance with one embodiment. In the example depicted in Figure 1, the resource dependent devices 4 include devices 6a and 6b classified as a first group (e.g. group 8) and devices 10a and 10b classified as a second group (e.g. group 12). The resource sharing system 1 manages and preserves the limited resources of computing device 4 by sharing a selected resource of the computing device 2 (e.g. a specified communication port) with a plurality of resource dependent devices 4 classified and/or associated as members of a same group (e.g. groups 8, and 12).

In one aspect, in terms of sharing a physical serial port, the plurality of resource dependent devices 4 can be physically connected to a single port (e.g. via a serial hub) of computing device 2 while only one of the resource dependent devices 4 is permitted to actively communicate with computing device 2.

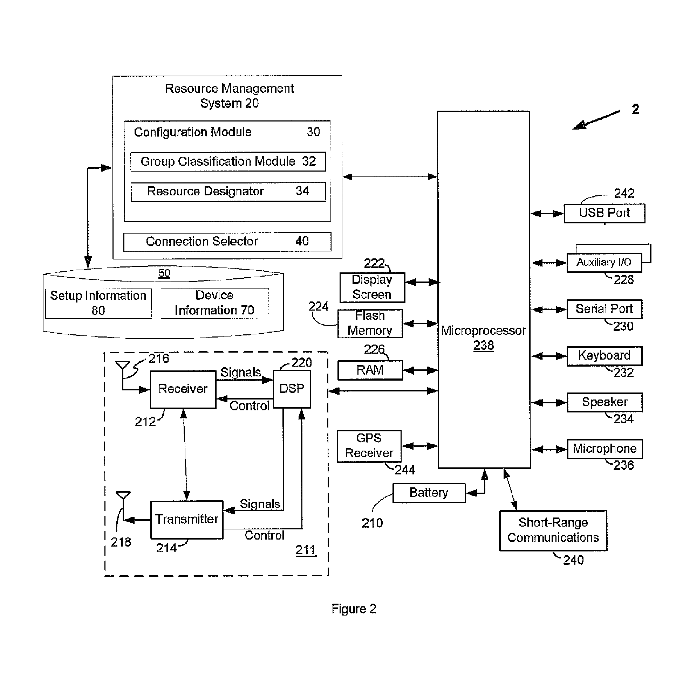

As illustrated in Figure 1, in one embodiment, the computing device 2 further comprises a resource management system 20 for facilitating allocation of the limited resources of the computing device 2. The resource management system 20 comprises a configuration module 30 and a connection selector 40. The configuration module 30 is configured to communicate with a database 50 for obtaining information such as device information 70 for each resource dependent device 4 to classify each said resource dependent device (e.g. device 6a) as a member of one of pre-defined groups (e.g. group 8).As will be described in relation to Figures 2 and 3, the device information (e.g. device information 70) comprises information for defining or characterizing a particular resource dependent device 4. The device information 70 can include for example, without limitation, Class of Device information (e.g. as provided by the manufacturer or defined as per Bluetooth Class of Device specifications or user defined), device type definitions (e.g. printer, scanners, imagers), device subcategory definitions (e.g. black and white printer, color printer), services provided by the device (e.g. imaging, printing), device characteristics (e.g. device model information), and other user-defined elements for characterizing the device and/or functionality. Other types of device information 70 for characterizing and grouping together the resource dependent devices 4 can be obtained from each resource dependent device 4, an external database, or can be user provided.

Referring again to the resource management system 20 of Figure 1, configuration module 30 is further configured for associating each group (e.g. groups 8, 12) of the resource dependent devices 4 with a particular one of the pre-determined resources of the computing device 2 such that each of said groups shares the particular resource. As will be described, configuration module 30 can further be configured to receive user input and/or pre-defined criteria to associate each group with the particular resource. In one aspect of the present invention, as will be described, during initialization, configuration module 30 can receive user input (e.g. via user interface) to classify at least some of the resource dependent devices 4 in each group and with a corresponding particular resource. That is, a first resource dependent device 4 is classified according to user input within a particular group and assigned to a defined resource. Accordingly, for one or more subsequently defined resource dependent devices 4 having similar device information 70 as the first resource dependent device 4, configuration module 30 is configured to automatically classify the subsequently defined resource dependent devices within the same group and associate it with a same resource as the first resource dependent device 4.

In addition, the resource management system 20 further comprises the connection selector 40. The connection selector 40 is configured for selecting one of the resource dependent devices 4 in each of the groups (e.g. device 6a in group 8 and device 10a in group 12) for permitting subsequent active connection between the selected resource dependent device (e.g. device 6a) and the associated resource (e.g. a particular COM port) of computing device 2. The selection of one of the resource dependent devices 4 (e.g. device 6a) for permitting subsequent connection with the resource of the computing device 2 can be made automatically by the connection selector 40 (e.g. in accordance with device information 70 and/or pre-defined criteria); semi-automatically (e.g. guided by user input from a user interface interacting with resource management system 20) or manually (e.g. via user input from the user interface of resource management system 20). Other criteria for selecting one of the resource dependent devices 4 in each group (e.g. groups 8, 12) for actively being connected to the desired resource of computing device 2 will be described below.

In one embodiment, once a first particular resource dependent device 4 (e.g. device 10a) is classified as being a member of a particular group (e.g. group 12) according to the device information 70, the configuration module 30 classifies a second resource dependent device 4 (e.g. device 10b) as being a member of the same group (e.g. group 12) when there is a pre-defined commonality between the device information 70 of the resource dependent devices 10a, and 10b. Additionally, the configuration module 30 automatically associates the second resource dependent device (e.g. device 10b) classified in the particular group (e.g. group 12) with the same resource associated with the first resource dependent device (e.g. device 10a).

As described earlier, the associated resource (e.g. the particular COM port of computing device 2) is associated with one of the groups of resource dependent devices (e.g. group 8) but connection selector 40 allows only one resource dependent device 4 from each group to be actively connected to the associated resource. In the example depicted in Figure 1, multiple printers are grouped together (e.g. group 8) according to their device information 70. The resource management system 20 ensures that only one of the printers (e.g. device 6a in the first group 8), is actively used by computing device 2 at a given time.

As will be described in relation to Figures 2 and 3, the computing device 2 and resource dependent devices 4 communicate via wired and/or wireless communication including for example Ethernet (WLAN) or Bluetooth (PAN). As also illustrated in Figure 1, the computing device 2 further comprises a plurality of interfaces 14 for communicating with the resource dependent devices 4 and providing access therewith to the limited resources of the computing device 2. As discussed earlier, the interfaces 14 can include the resource points discussed herein for facilitating access between a particular resource or service or functionality of the computing device 2 and the selected resource dependent device 4 selected for permitted access to the particular resource (e.g. allowing access to the particular resource by device 6a in group 8).

In one embodiment, at least one of the groups of devices (e.g. group 8, and group 12) and computing device 2 are Bluetooth enabled devices. Accordingly, in one example, the first group 8 and second group 12 of resource dependent devices 4 communicates with the computing device 2 via the Bluetooth communication network. In this example, the resource management system 20 is used to pair one resource dependent Bluetooth device within each group to computing device 2 being Bluetooth enabled. In this example, the device information 70 for classifying each resource dependent device 4 as a member of one the groups and/or for associating each said group with a particular one of said predetermined resources of computing device 2 can include for example, without limitation, Bluetooth address, device name, device type, device model number, and Bluetooth services provided by the resource dependent device 4 being classified. In the present example, computing device 2 can be a master mode and resource dependent devices 4 can be a slave mode or vice versa as desired.

In one embodiment illustrated in Figure 1, resource management system 20 is located on computing device 2 containing limited resources for sharing with resource dependent devices 4. In another embodiment (not illustrated), resource management system 20 is located on an external computing device connected to computing device 2 such that computing device 2 communicates with the resource dependent devices 4 via the external computing device. Accordingly, the external computing device allocates and manages limited resources of computing device 2 using the resource management system 20 as described earlier in relation to Figure 1, for classifying each of the resource dependent devices 4 and selecting one of the resource dependent devices 4 in each group for permitting subsequent connection between the selected resource dependent device 4 and the desired associated resource of computing device 2. In another embodiment, the external computing device comprising resource management system 20 communicates with a plurality of limited resource computing devices 2 and facilitates resource management for same. Additionally, it is noted that the number of resource dependent devices 4 shown in Figure 1 is an example configuration and can vary. Accordingly, the number of groups of resource dependent devices 4 can also vary and is configurable by resource management system 20 (e.g. depending on the categorization used for classifying each resource dependent device 4).

Figure 2 illustrates an architecture of the functional subsystems of computing device 2 in accordance with one embodiment. Computing device 2, which may be a handheld device, can have the capability of communicating at least data, and possibly any of data, audio and voice communications, to and from devices as well as data acquisition sources within a communication network. Additionally, as illustrated in Figure 1, computing device 2 can have the capability of sharing a pre-determined number of limited resources of the computing device 2 with a plurality of resource dependent devices 4.

Computing device 2 can include wired or wireless communication capability. In the wireless configuration, the computing device 2 typically includes radio frequency (RF) communication subsystem 211, which includes a receiver 212, a transmitter 214, and associated components, such as one or more embedded or internal antenna elements 216 and 218, and a processing module such as a digital signal processor (DSP) 220. As will be apparent to those skilled in field of communications, the particular design of RF communication subsystem 211 depends on the specific communication network in which computing device 2 is intended to operate, but can include communication functionalities such as radio-frequency identification (RFID), Wi-Fi WLAN based on IEEE 802.11 standards, Zigbee, Z-Wave, cellular data systems such as HSPDA, 1EVDO, GSM, EDGE and the like.

Computing device 2 includes a microprocessor 238 which controls general operation of device 101. Microprocessor 238 also interacts with functional device subsystems, such as a screen display module 222, a flash memory 224, random access memory (RAM) 226, auxiliary input/output (I/O) subsystems 228, serial port 230, keyboard module 232, speaker 234, microphone 236, short-range communications subsystem 240, such as Bluetooth™ for example, and Universal Serial Bus (USB) expansion port 242 for peripherals. Computing device 2 may include a power source such as battery module 210 which may also be rechargeable and/or replaceable from computing device 2. Computing device 2 may also include a positioning device 244, such as a GPS receiver for example, for receiving positioning information.

Still with regard to Figure 2, operating system software used by microprocessor 238 may be stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on computing device 2. A predetermined set of applications, which control basic device operations, or even more customized, advanced device operations, may be installed on computing device 2 during its manufacture, such as during the components configuration process described herein. These operations typically include data and voice communication applications, for example. As described herein, database 50 contains at least one of: device information 70 and setup information 60 for assisting resource management system 20 in allocating resource sharing. The information stored on database 50 may be defined locally on computing device 2, loaded from another computing device, loaded on an external computing device and accessible by computing device 2 or a combination thereof. As will be apparent to those skilled in field of communications, the particular design of communication subsystem 211 depends on the communication network in which computing device 2 is intended to operate, and may include various communication functionalities as will be understood by a person skilled in the art.

Display screen module 222 of computing device 2 may be used to visually present a software application's graphical user interface (GUI) to a user via a display screen. In one embodiment, the GUI can be used to display and/or allow manual modification of at least one of the classification of each resource dependent device 4 as a member of a particular group, the association of each group with a particular one of said predetermined resources, and the selection of one of said resource dependent devices 4 in each said group for permitting subsequent connection with the desired resource of computing device 2. For example, in the present embodiment, when a particular resource dependent device (e.g. device 6a) has been assigned a particular group (e.g. group 8) and a specified resource (e.g. a defined COM port "X"), the specified resource and/or the particular group can be reassigned using the user interface, by for example an administrator of resource management system 20.

Display screen module 222 may employ a touch screen display, in which case the user can manipulate application data by modifying information on the GUI using direct touches by a finger or stylus. Depending on the type of computing device 2, the user may have access to other types of input devices, such as, for example, buttons, a scroll wheel, trackball or light pen or any other input devices as will be envisaged by a person skilled in the art.

A graphical user interface presented at display screen module 222 of computing device 2 may enable an operator or administrator to interact therewith and modify resource assignments made by the resource management system 20, in accordance with one embodiment. It is further contemplated that computing device 2 can be communicatively coupled to a remotely located database (not shown) for containing the data in database 50.

As illustrated in Figure 2, and as mentioned above, computing device 2 comprises resource management system 20 for facilitating sharing of a pre-determined plurality of resources of computing device 2 with a plurality of resource dependent devices 4. As discussed earlier, resource management system 20 comprises configuration module 30 and connection selector 40.

Configuration module 30 and connection selector 40 can comprise any combination of software, firmware and hardware for allocating and controlling connection between limited resources of computing device 2 to the plurality of resource dependent devices 4. Configuration module 30 is adapted for determining a number of groups to be defined based on the number of pre-determined resources of computing device 2 for allocation. For example, if the limited resources of computing device 2 include two COM ports for allocating to a plurality of resource dependent devices 4, the configuration module 30 determines two groups of resource dependent devices 4. The configuration module 30 further comprises a group classification module 32 and a resource designator 34. Group classification module 32 is configured to classify each said resource dependent device 4 as a member of one the defined groups based on device information 70 (contained in database 50) associated therewith. In one embodiment, setup information 80 provided in database 50 is configured to provide one or more pre-defined criteria for classifying each resource dependent device 4 as a member of a particular group based on the device information 70. For example, the pre-defined criteria can include a pre-defined measure of commonality between device information 70 of each resource dependent device 4 classified in a same group. Alternatively the pre-defined criteria can define the type of device information 70 (e.g. class of device) to be used for categorizing the resource dependent devices 4 into groups.

In one example, resource dependent devices 4 are grouped based on their Class of Device (COD) and/or device type information provided in device information 70. For example, as described earlier, resource dependent devices 4 can be classified in the same group based on a pre-defined commonality in their device information 70. That is, in one example, group classification module 32 is pre-configured to classify all resource dependent devices 4 having a same device type (e.g. printers) as provided in device information 70, in a same group. Alternately, in another example, device information 70 provides device characteristics in addition to device types for each resource dependent device 4 (e.g. color printers vs. black and white printers). Accordingly, in this example, group classification module 32 is configured to classify each resource dependent device 4 according to their device characteristics and device types provided by device information 70 (e.g. color printers 4 grouped in a first group and black and white printers 4 grouped in a second group).

Referring again to Figure 2, connection selector 40 is configured for selecting one of the resource dependent devices 4 in each group (e.g. groups 8, 12) for permitting subsequent connection between the selected resource dependent device (e.g. device 10a) and an associated resource of computing device 2. In one embodiment, connection selector 40 can be triggered to select one resource dependent device 4 in a certain group in accordance with pre-defined criteria and/or user input received on computing device 4 requesting connection between computing device 2 and one resource dependent device 4 to cause selection of same for permitting subsequent connection.

In addition to manual activation of a selected resource dependent device 4 within a group, in one aspect, connection selector 40 can trigger the selected resource dependent device 4 within the group to be actively connected to a desired resource based on, but not limited to the following examples: powering on the selected resource dependent device 4; selected resource dependent device 4 is within a pre-defined range of computing device 2 (e.g. for Bluetooth or wireless applications), activation based on prior historical patterns/behaviors of desired connection between the resource of computing device 2 and the selected resource dependent device 4; triggering selected resource dependent device 4 to become actively connected to the desired resource for a certain defined duration of time or according to a pre-defined schedule.

In one aspect, a first resource dependent device (e.g. device 6a) is classified within a first group (e.g. group 8) and associated with a particular resource (e.g. a communication port or resource point of computing device 2) either automatically by configuration module 30 based on device information 70 or semi-automatically (by configuration module 30 in association with user input to verify and/or modify selections) or manually (via user input received from the GUI). The classification of the first resource dependent device 6a in the first group 8 and association with the particular resource are stored in database 50. Accordingly, when a second resource dependent device 6b having same or similar device information 70 as the first resource dependent device 6a (according to setup information 80) is added as a resource dependent device 4, database 50 is queried and the particular resource is assigned to the second resource dependent device 6a by configuration module 30. Additionally, configuration module 30 assigns the first group to the second resource dependent device 6b. In accordance with the present embodiment, in this manner, resource dependent devices 4 having a pre-defined device information 70 commonality (e.g. same class of device or class type) with each previously classified resource dependent device 4 are automatically assigned to a group and resource accordingly by the configuration module 30.

In accordance with one embodiment discussed earlier, the GUI of resource management system 20 allows reclassifying a selected resource dependent device 4 (e.g. first resource dependent device 6a) to be a member of a user-defined group (e.g. the second group 12) and/or changing the association of a selected group (e.g. group 8) and a previously defined resource to associate the selected group 8 with a different user-defined resource. Additionally, in one aspect, a user of the resource management system 20 manually changes the resource (e.g. communication port or resource point) assigned to a selected resource dependent device 4.

Referring now to Figure 3, in one embodiment illustrated, resource management system 20 further comprises a locator module 90 for locating at least one of resource dependent devices 4 that are available for connection with computing device 2 and identifying available resources (e.g. communication port or resource point) for use with resource management system 20 in allocating sharing of the pre-determined resources. The locator module 90 can implement a scan or other suitable discovery process, such as to transmit a request signal to find available resource dependent devices 4 (e.g. available for connecting to computing device 2). In response to the request signal provided within resource management system 1, available resource dependent devices 4 (e.g. devices 6a, 6b, 10a and 10b) are detected by locator module 90. In one aspect, locator module 90 can be configured to determine the available resource dependent devices 4 prior to allocating resource sharing of the limited resources of computing device 2 by resource management system 20.

Referring now to Figure 4, there is illustrated an example process for implementing resource sharing of a pre-determined plurality of resources of computing device 2 with the plurality of resource dependent devices 4. At step 452, the number of resources available for sharing are identified (e.g. communication ports and/or Bluetooth Serial port identified via locator module 90). Accordingly, the number of groups of resource dependent devices 4 corresponds to the number of resources identified at step 452. At step 454, a resource dependent device 4 is selected and assigned as a member of one of the groups at step 456 via group classification module 32 and/or user input. For example, the selected resource dependent device 456 is classified as a member of a certain class of device type (e.g. "printers" group). If the assigned group has been defined previously, at step 462, the database 50 is queried by resource designator 34 to determine the corresponding resource associated with the group. At step 464, the corresponding resource (e.g. communication port) is assigned to the group and to the selected resource dependent device via resource designator 34 and database 466 updated accordingly. If the group assigned to the selected resource dependent device at step 456 is not a previously defined group, then at step 460, a resource is associated with the assigned group and the selected resource dependent device (e.g. via resource designator 34). At step 468, it is determined by resource management system 20 whether each resource dependent device 4 has been assigned to a group and a communication port, if not, the process of Figure 4 is repeated at step 454.

Referring now to Figure 5, there is illustrated an example of defining groups of devices 100 associated with device information 70 (e.g. based on class of device information) for subsequently classifying the resource dependent devices 4 therein. In the example of Figure 5, four groups: Group 1 as 102a, Group 2 as 102b, Group 3 as 102c, Group 4 as 102d have been defined. Each group is associated with a pre-defined class of device (e.g. as provided by device information 70). In the example illustrated "color printers" 70a are associated with group 1; "Black and White Printers" 70b are associated with group 2; "Scanners" 70c are associated with group 3; and "Headsets" 70d are associated with group 4. In the present example, the association of a particular device information (e.g. class of device 70a-70d) with one of the groups 102a-102d can be made by configuration module 30, or pre-defined by a user. Additionally, the association of the device information 70 with each of the groups 102a-102d is stored in database 50 for subsequent access in classifying each resource dependent device 4 in one of said groups. In the example illustrated, for each group of devices 102a-102d, a particular resource of computing device 2 (e.g. a communication port) is assigned. That is, as illustrated in Figure 5, port 104a shown as "<COM:6>", is assigned to "Group 1". Port 104b, shown as "<COM:7>", is assigned to "Group 2". Port 104c, shown as "<COM:8>", is assigned to "Group 3". Port 104d, shown as "<BSP:3>" (e.g. Bluetooth serial port), is assigned to "Group 4".

Accordingly, as described above, associating a particular resource of computing device 2 (e.g. the communication ports of Figure 5) with each group of device 102a-102d can be performed automatically or manually. That is, configuration module 30 can automatically assign a particular resource to the group 102a-102d based on device information 70. In the example illustrated, the communication ports 104a-104d are assigned based on pre-defined services provided by each resource dependent device 106a-106d (e.g. as stored in device information 70). Alternately, a user or administrator can interact with the GUI of resource management system 20 to assign or reassign a particular communication port 104a-104d to each group 102a-102d based on availability of the communication ports of computing device 2 as provided by locator module 80.

As described above, the assignment of a port to a COD may be performed automatically or manually. For the manual configuration, the initial setup module 22 of Figures 1-2 provides to the user a list of services associated with each class, e.g., a list 86a for Class 1, a list 86b for Class 2, a list 86c for Class 3, and a list 86d for Class 4. In this example, the list 86a includes four selections: "1) marketing"; "2) sales"; "3) production"; "4) mobile printer". If the user selects "1) marketing" for Class 1, then the module 22 automatically assigns the port 84a to Class 1. The user may manually assign/reassign another port to Class 1, among available ports. A list of the available ports is provided to the user via the module 22.

Referring to Figure 6, an exemplary process for implementing resource sharing system 1 of Figures 1 and 3 specifically for Bluetooth devices is shown. Referring to Figure 1, resource sharing system 1 can be configured to operate with Bluetooth devices 6a, 6b, 10a, and 10b and communicate with Bluetooth enabled computing device 2 via Bluetooth radio link. Accordingly in this example, groups 8 and 12 are defined by resource management system 20 which groups Bluetooth resource dependent devices 4 having similar device information 70 including their Bluetooth class of device (COD). As described earlier, the association between the class of device information 70, a pre-defined group for subsequently classifying resource dependent devices 4 having selected class of device information and the association of the pre-defined group with a particular resource of computing device 2 can be made manually and/or automatically based on pre-defined criteria associated with configuration module 30. That is, once the groups having particular class of device have been defined and associated with the particular resource, then resource dependent devices 4 can each be classified by the configuration module 30 within a respective group and resource.

Referring again to Figure 6, at step 640, locator module 90 is configured to discover or identify Bluetooth devices accessible to computing device 2. Accordingly at step 642, locator module 90 defines a list of discovered Bluetooth resource dependent devices 4 which include for examples, device 6a, 6b, 10a and 10b illustrated in Figure 1. The discovered devices can be stored in database 50 for subsequent access and classification by resource management system 20. Alternately, discovering Bluetooth devices at step 640 includes transmitting a request to resource management system 20 for locating available resource dependent devices 4, and receiving a response from the resource dependent devices 4. The discovery process at step 640 can further include receiving device information 70 such as at least one of: device addresses, device types and device names for each available resource dependent device 4.

Accordingly, resource management system 20 is configured to group the discovered resource dependent devices 4 and associate them with a particular resource (e.g. communication port) of computing device 2. That is, resource management system 20 can provide a list of discovered Bluetooth resource dependent devices 4 such that a user can select one resource dependent device 4 for each group of devices (e.g. a single handset, and/or a single scanner). Accordingly, depending on the resource dependent device 4, once the device is paired or connected, it will attach itself to a resource of computing device 2.

Referring again to Figure 6, at step 644 and 646, group classification module 32 provides the group classifications and resource associations (e.g. communication port assignment) based on device information 70 (e.g. class of device types) and/or user-defined input for each resource dependent device 4. In one aspect, a user can interact with the defined group classification and modify the group classifications and/or associated resources. As described earlier, in the case where a user or resource management system 20 provides the group classification and/or resource association for a first resource dependent device 4, resource management system 20 is configured to automatically assign a respective group and/or resources (e.g. a defined communication port) to subsequent resource dependent devices 4 having same or similar device information 70 (e.g. same class of device types). In one example, when a user pairs a first resource dependent Bluetooth device 4 with computing device 2, the user is asked to provide or identify device information 70 (e.g. class of device) for the first resource dependent Bluetooth device. It is noted that a selected resource can be reserved for each group of devices (e.g. headset group of resource dependent devices 4 is pre-configured to be associated with a particular communication port).

At step 648, database 50 including group classifications and resource assignments for the resource dependent devices 4 is stored. Subsequently, connection selector 40 is configured for facilitating selection of one resource dependent device 4 within each group to be actively connected to computing device 2. That is, the selected resource dependent Bluetooth device 4 and the corresponding resource are connected via a connection process between the Bluetooth devices, as will be understood by one of ordinary skill in the art.

As will also be understood by a person skilled in the art, in Bluetooth communications, it is typically desirable to connect a single headset (resource dependent device 4) to computing device 2 to receive audio at any one given point. Accordingly, in one aspect, by classifying the resource dependent devices 4 according to their class of device, resources of computing device 2 are maximized. Additionally, resource management system 20 allows a user via connection selector 40 to remove a particular headset from the headset group of resource dependent devices 4 and assign it to a different port or resource as desired.

Referring to Figure 7, there is illustrated examples of portions of graphical user interface screens displayed to the user (i.e. "screen shots") for selecting one of the resource dependent devices 4 in one of the groups for making a connection between the selected resource dependent device 4 and computing device 2 as provided by connection selector 40 of Figures 1-3. In screen 760a, when the user clicks and holds an icon (e.g., Bluetooth logo or Bluetooth icon) or single-clicks (CE) (762) on a screen (760a), a service menu 764 is provided in screen 760b. The user can select a service from the menu 764 as shown in screen 760b. When the user selects "Quick Connection" from the menu 764, then a quick connection menu 766 is displayed in screen 760c. Accordingly, a list of class of device defined groups is provided via the menu 766. The list provided in menu 766 is based on device information 70 groups defined (e.g. groups defined as per class of devices) as previously configured by configuration module 30. In this example, resource dependent devices 4 are grouped according to their class of devices such as: scanners, printers and headsets. Depending on the selection of a group by the user, a corresponding group menu 768 is displayed as illustrated in screen 760d. The list of available devices on the selected group, which has been setup and configured, is displayed via the menu 768. The user selects one resource dependent device 4 to be paired from the menu 768. In this example, the user selects "Scanner", and then selects one scanner "SNR -A" from the scanner group. Thus the scanner "SNR-A" is selected as a resource dependent device 4 for being active and available for connection therewith.

In one aspect, a resource dependent device 4 can be connected to more than one limited resource device 2. Accordingly, the connection selector 40 can provide a menu screen to select one limited resource device from a plurality of limited resource devices 2. Once a single limited resource device 2 is selected, connection selector 40 provides the selection screen display for that single limited resource device 2.

Referring to Figure 8, there is illustrated example screen shots provided by resource management system 20 for defining groups with associated device information 70 (e.g. class of devices) and resource associations for use in classifying each resource dependent device 4. For example, when a first scanner is to be paired, a menu 762 is displayed on a screen 780a. A list of resource dependent devices 4, which are scanned and discovered Bluetooth devices (e.g. as provided by locator module 80), is shown with their addresses. A user interface of resource management system 20 provides the screen shots presented in Figure 8.

The user clicks "PAIR" button 784 and selects one resource dependent device 4 from the menu 782. In this case, the scanner "SNR-A" is selected. Then, the device "SNR-A" data 786 including its device information 70 such as services is displayed at screen 780b. The displayed services includes ports for the device "SNR-A" as shown at 786. In this example, the user selects a "serial port" for the scanner "SNR-A". Then the serial port profile 788 for the device "SNR-A" is displayed at 780c. The profile 788 shows available ports (under category Port 190) as resources of computing device 2 and resource dependent device 4 types (Type) 792 for defining each group. The user select "Scanner" (Type) to associate SNR-A with the "Scanner" group and "COM:8" (Port) to associate the SNR-A with this resource. The user also select QuickConnect option 794. The QuickConnect option 794 is used in the initial setup of the SNR-A device in order to assign this device for subsequent access by the connection selector 40.

When the user selects the device "SNR-B" from the menu 762 as a second scanner, and defines the device information 70 as device type "Scanner" from the menu 792, configuration module 30 assigns the resource or port also associated with "SNR-A". That is, configuration module 30 automatically assigns quick connection option to "SNR-B" (794) and the "Port" field 192 is automatically populated based on the first scanner associations.

Accordingly, resource management system 20 of Figures 1-3 solves the issue of limited resources of computing device 2 (including communication ports and other resource points limited in number). Accordingly, with the resource management system 20, each available resource dependent device 4 only needs to be setup/configured once. The configuration and classification details are stored in database 50 and used to categorize the remaining resource dependent devices 4 having similar device information 70. Once the user desires to make a connection to one of the resource dependent devices 4, the connection process is minimized in complexity by allowing the user to simply select a limited resource computing device 2 to which the user wants to connect the resource dependent device 4.

## Claims

1. A method of sharing a pre-determined plurality of resources of a limited resource computing device (2) with a plurality of resource dependent devices (4), the method comprising:
(a) determining a plurality of groups (8, 12) based on said pre-determined plurality of resources;
(b) classifying each said resource dependent device (4) as a member of one of said groups (8, 12) based on device information (70) associated therewith;
(c) associating each said group (8,12) with a particular one of said pre-determined resources, such that each said group (8,12) shares said particular resource; and
(d) selecting one of said resource dependent devices (6a, 6b, 10a, 10b) in each said group (8, 12) for permitting subsequent connection between said selected resource dependent device (4) with said associated particular resource.

2. The method of claim 1, wherein classifying each said resource dependent device (4) as said member of one of said groups (8, 12) further comprises:
(a) associating a first group (8, 12) and a first particular resource of said pre-determined plurality of resources to a first resource dependent device (6a, 6b, 10a, 10b); and
(b) automatically associating a second resource dependent device (6a, 6b, 10a, 10b) classified in said first group (8, 12) with said first particular resource.

3. The method of any one of claims 1 to 2, wherein the device information (70) comprises at least one of: class of device, device type, device manufacturer, Bluetooth address, services provided by said resource dependent device (4), and device characteristics.

4. The method of any one of claims 2 to 3, wherein classifying said first resource dependent device (6a, 6b, 10a. 10b) in said first group (8, 12) is in dependence upon a pre-defined commonality between the device information (70) of each said resource dependent device in said first group (8, 12).

5. The method of any one of claims 1 to 4, wherein selecting one of said resource dependent devices (6a, 6b, 10a, 10b) from each group (8, 12) for permitting subsequent connection with said associated particular resource further comprises: providing a user interface for facilitating selection of said one resource dependent device (6a, 6b, 10a, 10b) from each group (8, 12).

6. The method of any one of claims 1 to 5, wherein selecting one of said resource dependent devices (6a, 6b, 10a, 10b) from each group (8, 12) for permitting subsequent connection with said associated particular resource is in response to receiving a connection request for connecting said selected resource dependent device (6a, 6b, 10a, 10b) with said associated particular resource.

7. The method of any one of claims 2 to 6, further comprising: providing an interface for manually changing the association of said second resource dependent device (6a, 6b, 10a, 10b) to a second group of devices (8, 12).

8. The method of any one of claims 1 to 7, wherein each of said plurality of resources is associated with one of: a single communication port, a USB interface, a virtual port, and a Bluetooth serial port.

9. The method of any one of claims 1 to 8, further comprising: generating a list of available resource dependent devices for subsequently classifying each available resource dependent device (6a, 6b, 10a, 10b) as a member of one of said groups (8, 12).

10. The method of any one of claims 1 to 9, further comprising: providing a user interface for manually reconfiguring one of: the classification of at least one of said resource dependent devices (4) as a member of a particular group (8, 12) of said groups to classify said at least one of said resource dependent devices (4) as a member of a second group (8, 12) of said groups; and the association between a selected group (8, 12) of said groups and said particular one of said pre-determined resources.

11. The method of any one of claims 1 to 10, further comprising: deselecting said selected one of said resource dependent devices (4) in at least one said group (8, 12) for selecting a second of said resource dependent devices (6a, 6b, 10a, 10b) in said at least one said group (8, 12) for permitting subsequent connection between said selected second resource dependent device (4) with said associated particular resource.

12. The method of claim 10, further comprising: automatically reconfiguring each of said resource dependent devices (4) associated with said particular group (8, 12) as a member of said second group.

13. The method of any one of claims 1 to 12, wherein associating a particular group (8, 12) with said particular one of said pre-determined resources is based on device information (70) of said resource dependent devices (4) in said particular group (8, 12), said device information (70) comprising at least one of: a class of device, a device type, services provided by said device, manufacturer information, and device characteristics.

14. A computer program product storing instructions and data to configure a processor to perform the method of any one of claims 1 to 13.

15. A computing device (2) for configuring sharing of a plurality of resources of the computing device having limited resources with a plurality of resource dependent devices (4), the computing device (2) comprising:
(a) a processor and a memory coupled thereto, the memory storing instructions and data configuring the processor to perform the method according to any one of claims 1 to 13.
